# FASCICULE DE BREVET EUROPEEN

(11) **EP 2 175 298 B1**
(45) Date de publication et mention de la délivrance du brevet: **20.02.2013**
(21) Numéro de dépôt: 09172202.5
(22) Date de dépôt: 05.10.2009
(51) Int. Cl.: G02B 7/18, G02B 7/00

(54) **Système de stabilisation d'une structure rigide soumise à des déformations thermoélastiques**
Stabilisierungssystem einer starren Struktur, die thermoelastische Verformungen ausgesetzt ist
System for stabilising a rigid structure subjected to thermoelastic deformations

(30) Priorité: 07.10.2008 FR 0856798
(43) Date de publication de la demande: 14.04.2010
(73) Titulaire: Astrium SAS, 75016 Paris (FR)
(72) Inventeur: Antoine, Pierre-Olivier, 31700 Blagnac (FR); Charvet, Didier, 31650 Lauzerville (FR)
(74) Mandataire: Cabinet Plasseraud

(56) Documents cités:
- EP-A- 1 376 239
- EP-A- 1 387 054
- US-A- 4 435 045
- HAN Y.-Y. ET AL.: "Optimum design and thermal analysis of lightweight silicon carbide mirrors" PROCEEDINGS OF SPIE - THE INTERNATIONAL SOCIETY FOR OPTICAL ENGINEERING - 2ND INTERNATIONAL SYMPOSIUM ON ADVANCED OPTICAL MANUFACTURING AND TESTING TECHNOLOGIES: LARGE MIRRORS AND TELESCOPES 2006 SPIE US, vol. 6148, 2 novembre 2005 (2005-11-02), XP002529689
- ZHANG J. ET AL.: "Design and fabrication of large-scale lightweight SiC space mirrors" PROCEEDINGS OF SPIE - THE INTERNATIONAL SOCIETY FOR OPTICAL ENGINEERING - 2ND INTERNATIONAL SYMPOSIUM ON ADVANCED OPTICAL MANUFACTURING AND TESTING TECHNOLOGIES: LARGE MIRRORS AND TELESCOPES 2006 SPIE US, vol. 6148, 2 novembre 2005 (2005-11-02), XP002529690
- KANEDA H. ET AL.: "Development of space infrared telescope for the SPICA mission" PROCEEDINGS OF SPIE - THE INTERNATIONAL SOCIETY FOR OPTICAL ENGINEERING - OPTICAL, INFRARED, AND MILLIMETER SPACE TELECOPES 2004 SPIE US, vol. 5487, no. PART 2, 2004, pages 991-1000, XP002529691

## Description

La présente invention concerne un système permettant de stabiliser une structure rigide vis-à-vis de déformations thermoélastiques.

De nombreux systèmes nécessitent qu'une structure rigide présente une stabilité dimensionnelle élevée lorsque le champ de température de la structure rigide varie en fonction de l'utilisation faite. Pour cela, plusieurs méthodes sont couramment mises en oeuvre pour réduire les déformations thermoélastiques de la structure rigide.

Tout d'abord, des raidisseurs peuvent être agencés à l'arrière de la structure rigide. De tels raidisseurs sont connectés rigidement à la face postérieure de la structure rigide, et ont pour objectif une réduction de masse vis-vis de sollicitation mécanique.

Par ailleurs, lorsque la structure rigide est susceptible de recevoir un flux thermique externe qui est variable sur une face antérieure utile de cette structure, il est connu de prévoir une unité de chauffage et/ou de refroidissement qui apporte de la chaleur à la face postérieure de la structure rigide ou bien en extrait à partir de cette dernière. De cette façon, des variations de la température moyenne de la structure rigide peuvent être atténuées, et les déformations de la structure rigide qui sont provoquées par les variations du flux thermique externe sont aussi réduites en conséquence.

Toutefois, ces méthodes peuvent être insuffisantes pour réduire les déformations thermoélastiques qui apparaissent dans certains systèmes, jusqu'à un niveau qui soit suffisamment bas pour être compatible avec un fonctionnement satisfaisant de ces systèmes. Une telle exigence élevée de stabilité dimensionnelle existe notamment pour les miroirs et/ou structures porteuses de télescopes, notamment lorsque ces télescopes sont utilisés à bord de satellites. En effet, les déformations variables d'un miroir et/ou de la structure porteuse d'un télescope limitent la résolution des images qui peuvent être formées par ce télescope. Or, en fonction de la mission du satellite, la face utile optiquement du miroir primaire peut être exposée à un flux de rayonnement externe qui est variable. Ce flux de rayonnement variable est susceptible de provoquer un échauffement ou un refroidissement du miroir, et par suite des déformations thermoélastiques de celui-ci.

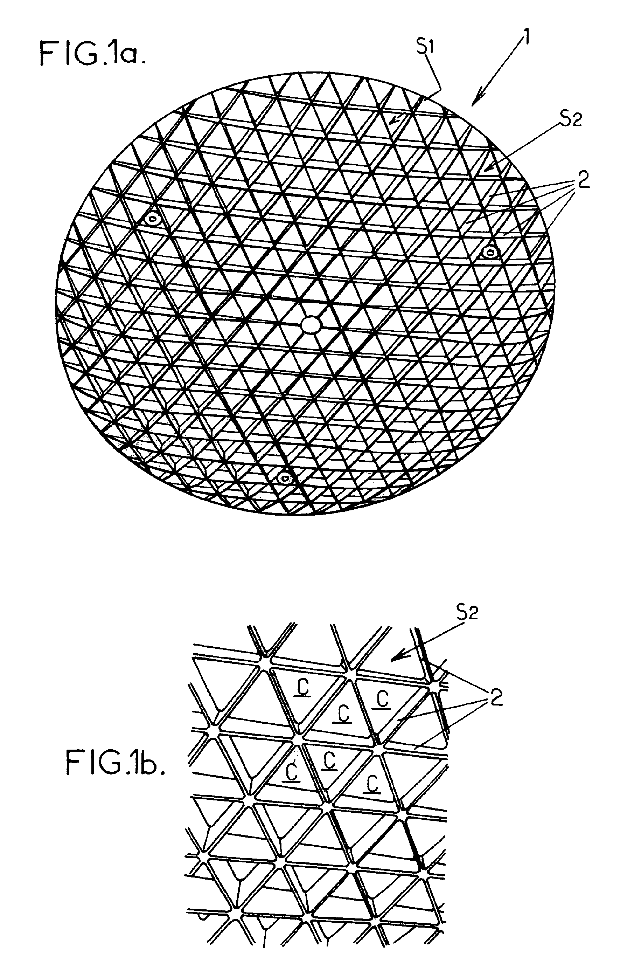

A titre d'illustration, les figures 1a et 1b représentent un miroir de télescope vu par sa face postérieure. La référence 1 désigne globalement le miroir, et les références S1 et S2 désignent respectivement sa face réfléchissante antérieure, dite face utile optiquement, et sa face postérieure. La face S2 est munie d'un réseau de raidisseurs 2, qui définissent des cellules C au fond desquelles la face S2 est exposée. Chaque raidisseur 2 est formé par une paroi, aussi appelée nervure, qui s'étend sensiblement perpendiculairement à la face postérieure S2, avec une longueur de saillie qui est mesurée à partir de la face S2. Le plus souvent, les raidisseurs 2 et le miroir 1 forment une pièce de fabrication unique. Eventuellement, lorsque le miroir 1 est de grande taille, il peut être constitué de portions de miroir distinctes qui sont juxtaposées. Dans ce cas, les raidisseurs appartiennent à la même pièce de fabrication que la portion de miroir correspondante.

Par exemple, le miroir 1 peut être en carbure de silicium (SiC), avoir un diamètre de 300 mm (millimètre) et une épaisseur de 2 mm comprise entre les faces S1 et S2. Les raidisseurs 2 peuvent avoir chacun une épaisseur de 4 mm et une longueur de saillie qui est comprise entre 20 et 40 mm. Dans la présente description, les termes de structure rigide et de miroir comprennent l'élément solide ou la partie d'élément solide qui est comprise entre la face antérieure S1 et la face postérieure S2, à l'exclusion des raidisseurs qui sont à l'extérieur de l'intervalle limité entre ces deux faces.

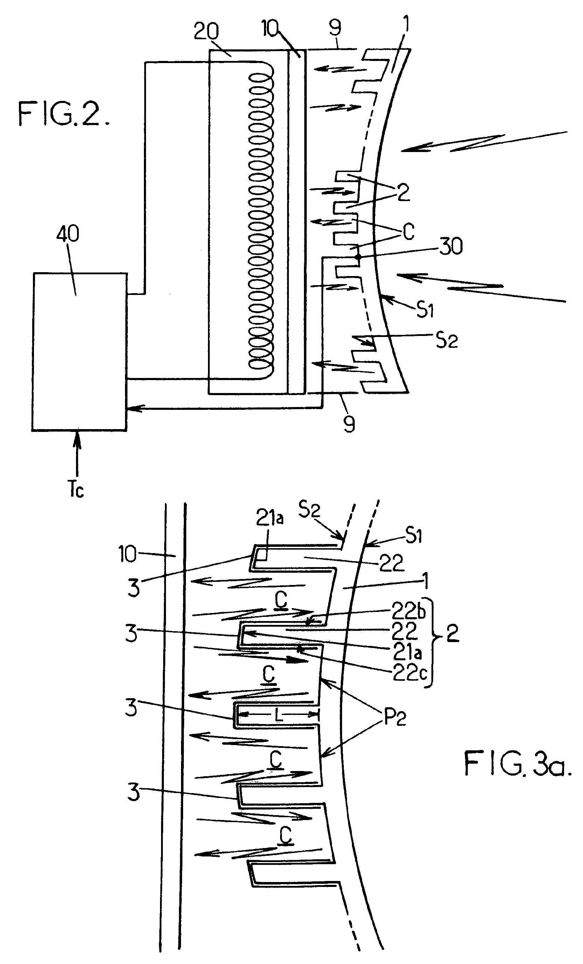

La figure 2 illustre un système de stabilisation dimensionnelle du miroir 1, tel que connu de l'art antérieur. La référence 10 désigne un écran émissif qui est disposé en vis-à-vis de la face postérieure S2 du miroir 1. Le miroir 1 et l'écran 10 interagissent thermiquement par l'intermédiaire d'un flux radiatif net qui est transmis entre le miroir 1 et l'écran 10. Ce flux radiatif résulte de rayonnements qui sont émis spontanément par le miroir 1 ou par l'écran 10 en fonction de leurs températures respectives, et contribue à amener le miroir 1 et l'écran 10 à une même température commune.

L'unité de chauffage et/ou de refroidissement est référencée 20. Elle est couplée directement à l'écran 10 pour le chauffer ou le refroidir. Le miroir 1 est alors chauffé ou refroidi en conséquence, grâce à son interaction radiative avec l'écran 10. De cette façon, il est possible de commander l'unité 10 pour maintenir constante la température moyenne du miroir 1. Pour cela, une unité de contrôle 40 peut être connectée pour commander une puissance de fonctionnement de l'unité de chauffage et/ou de refroidissement 20 en fonction d'un signal de mesure de la température du miroir 1 et d'une température de consigne T_{C}. La référence 30 désigne le capteur qui produit un signal de mesure de la température du miroir 1. Ce peut être un thermocouple qui est disposé sur la face postérieure S2 du miroir 1, par exemple.

Un élément de fermeture latérale 9 peut être disposé en outre entre des bords périphériques respectifs du miroir 1 et de l'écran 10. Il forme une isolation radiative entre la face postérieure S2 du miroir 1 et un environnement externe au système. Pour cela, l'élément 9 peut réfléchir des rayonnements externes qui pénétreraient sinon entre le miroir 1 et l'écran 10, et perturberaient le contrôle de la température du miroir 1.

Il est aussi connu de disposer une structure tubulaire autour de l'entrée optique du télescope, à partir du bord périphérique du miroir primaire. Une telle structure est couramment appelée garde thermique. Elle permet de stabiliser l'environnement thermique de la face optique du miroir, en assurant une température et donc un échange radiatif contrôlé sur un facteur de vue important de la face optique du miroir. Le facteur de vue complémentaire de la face optique du miroir contient les sources de perturbation thermique. Le gain en stabilité thermique qui est apporté par une garde thermique est d'autant plus faible que le miroir reçoit directement, par le facteur de vue complémentaire, des variations de flux externes qui sont importantes.

Par exemple, pour un satellite d'observation terrestre, des manoeuvres de changement d'attitude peuvent être réalisées en cours de mission, pendant lesquelles le facteur de vue du télescope peut contenir temporairement le soleil. Le rayonnement solaire qui est reçu par le miroir 1 est alors momentanément important, et le contrôle de la température du miroir 1 qui est réalisé par l'intermédiaire de l'écran 10 est le seul à être efficace.

Or, à cause de la présence des raidisseurs 2, l'interaction radiative qui couple l'un avec l'autre l'écran 10 et la face postérieure S2 du miroir 1 intervient en parallèle avec une interaction radiative directe qui se produit entre l'écran 10 et les raidisseurs 2. En outre, à cause de la longueur de saillie des raidisseurs 2, ceux-ci suppriment une partie significative des rayonnements thermiques qui se propagent obliquement entre la face S2 et l'écran 10. L'interaction radiative directe entre l'écran 10 et les extrémités des raidisseurs 2 qui sont opposées à la face S2 du miroir 1 peut alors même être supérieure à l'interaction radiative directe entre l'écran 10 et le miroir 1. Dans ce cas, le chauffage ou le refroidissement qui est produit par l'unité 20 affecte d'abord ces extrémités des raidisseurs 2. Il en résulte des écarts de température qui apparaissent à l'intérieur des raidisseurs 2, perpendiculairement à la face postérieure S2 du miroir 1. Or ces écarts de température, désignés par gradients axiaux du fait de leur orientation par rapport au miroir 1, produisent eux-mêmes des déformations thermoélastiques du miroir 1, qui réduisent la résolution des images formées par le télescope.

L'article de Yuan-yuan HAN et al., proc. SPIE, vol. 6148, pg. R-1 à R-5, ainsi que les demandes de brevets US 4 435 045 et EP 1 376 239 décrivent des systèmes connus.

Un but de la présente invention est alors de réduire de telles déformations thermoélastiques qui sont produites par des gradients de température axiaux.

Pour cela, l'invention, telle que définie dans la revendication 1, propose un système qui permet de stabiliser une structure rigide vis-à-vis de déformations thermoélastiques.

Un système selon l'invention est donc amélioré pour que les raidisseurs ne soient plus par eux-mêmes en interaction radiative directe avec la structure émissive. De cette façon, la température des raidisseurs reste proche de celle de la structure rigide qui est comprise entre les faces antérieure et postérieure. Autrement dit, les gradients de température axiaux qui pourraient être présents dans les raidisseurs sont réduits. Les déformations thermoélastiques qui résulteraient de tels gradients de température axiaux sont réduites en conséquence.

La structure rigide interagit thermiquement avec la structure émissive par l'intermédiaire des portions de sa face postérieure qui restent découvertes à l'intérieur des cellules. Les rayonnements thermiques qui sont produits par la structure émissive sont alors absorbés par ces portions de la face postérieure elles-mêmes dans une proportion supérieure. Il en est de même des rayonnements thermiques qui sont produits par la face postérieure de la structure rigide : ceux-ci sont absorbés dans une proportion supérieure par la structure émissive, puisque les raidisseurs n'absorbent plus une partie de ces rayonnements. Ainsi, le couplage thermique par rayonnement qui intervient directement entre la structure rigide et la structure émissive est augmenté. La structure émissive permet donc un contrôle plus efficace de la température de la structure rigide.

Un autre avantage de l'invention réside dans la réduction des raidisseurs qui peut être mise en oeuvre, tout en conservant des amplitudes maximales des déformations thermoélastiques de la structure rigide qui sont identiques. En effet, grâce à la réduction des gradients de température axiaux procurée par l'invention, l'épaisseur et ou le nombre de raidisseurs peut être diminué. Il en résulte une réduction de la masse du système, qui est particulièrement avantageuse lorsque ce système est destiné à être embarqué à bord d'un engin spatial.

L'invention peut être appliquée à de nombreux systèmes qui nécessitent une grande stabilité dimensionnelle. En particulier, la structure rigide peut former un miroir, par exemple un miroir primaire de télescope. Sa face antérieure est alors réfléchissante pour au moins une longueur d'onde d'utilisation du miroir. Alternativement, la structure rigide peut former une platine d'un support mécanique, par exemple une platine de support d'instruments de précision.

La structure émissive possède des prolongements qui pénètrent dans certaines au moins des cellules formées par les raidisseurs à l'arrière de la structure rigide. Ces prolongements de la structure émissive ont chacun des faces latérales qui sont tournées vers les parois des raidisseurs formant les cellules correspondantes. Dans ce cas, l'ensemble d'isolation radiative est porté par la structure émissive, il recouvre les faces latérales respectives de certains au moins de ces prolongements. Il recouvre aussi des portions de la structure émissive qui sont situées entre des prolongements voisins. Mais il ne recouvre pas des faces d'extrémités respectives des prolongements qui sont tournées vers les portions de la face postérieure de la structure rigide situées dans les cellules.

Selon un perfectionnement de l'invention, un système selon l'invention peut comprendre en outre :
- une unité de chauffage et/ou de refroidissement, qui est agencée pour chauffer ou refroidir la structure émissive ;
- un capteur de température, qui est disposé pour fournir un signal de mesure d'une température de la structure rigide ; et
- une unité de commande, qui est connectée pour asservir un fonctionnement de l'unité de chauffage et/ou de refroidissement en fonction d'un écart entre la température de la structure rigide et une température de consigne.

De préférence, plusieurs ensembles de contrôle de température peuvent être agencés en parallèle, de façon à contrôler plusieurs températures de la structure rigide simultanément dans des zones différentes de celle-ci.

Un tel perfectionnement permet de mieux maintenir la température moyenne de la structure rigide sensiblement constante, même lorsque celle-ci reçoit par intermittence des flux thermiques externes qui sont variables. Autrement dit, la température moyenne de la structure rigide peut être contrôlée, même lors de régimes transitoires. Les raidisseurs sont alors en équilibre thermique avec la structure rigide. Les gradients de température axiaux présents dans les raidisseurs sont donc diminués même lors de contrôles de la température de la structure rigide en régimes dynamiques. Les déformations thermoélastiques de la structure rigide que pourraient causer de tels gradients axiaux sont donc réduits encore plus par un tel contrôle actif de la température de la structure rigide.

De préférence, le ou les capteur(s) est (sont) disposé(s) pour fournir un signal de mesure d'une température de la face postérieure de la structure rigide.

D'autres particularités et avantages de la présente invention apparaîtront dans la description ci-après d'exemples de réalisation non limitatifs, en référence aux dessins annexés, dans lesquels :
- la figure 1a est une vue en perspective d'un miroir tel que connu de l'art antérieur, auquel l'invention peut être appliquée ;
- la figure 1b est une vue grossie d'une partie de la figure 1a ;
- la figure 2 est un schéma de principe en section transversale, d'un système à faibles déformations thermoélastiques tel que connu avant l'invention ;
- les figures 3a à 3c sont des parties grossies de coupes transversales de systèmes. La figure 3c représentant un mode de réalisation de l'invention; et
- la figure 4 correspond à la figure 2, pour un système à faibles déformations thermoélastiques selon l'invention.

L'invention est maintenant décrite en détail dans le cadre de l'application à un miroir de télescope. Néanmoins, il est entendu que cette application n'est pas limitative, et que l'invention peut être appliquée d'une façon équivalente à tout système qui comprend une structure rigide pour laquelle une stabilité dimensionnelle élevée est requise.

Le miroir de télescope et le réseau des raidisseurs des figures 1a et 1b peuvent être repris sans que des modifications spécifiques soient nécessaires pour mettre en oeuvre l'invention. Des références numériques qui sont utilisées dans la suite en étant identiques à des références déjà introduites en relation avec ces figures, ont donc des significations identiques. Le miroir 1 constitue la structure rigide pour laquelle une stabilité élevée est recherchée, par rapport à des déformations thermoélastiques. L'écran 10 constitue la structure émissive.

Le système peut encore comprendre l'élément de fermeture latérale 9, qui est disposé entre les bords périphériques respectifs du miroir 1 et de l'écran 10.

La figure 3a illustre un premier exemple, dans lequel les raidisseurs 2 sont des nervures simples 22. Une telle configuration des raidisseurs est dite ouverte, dans le jargon de l'Homme du métier. Chaque nervure 22 a une longueur de saillie L, qui est mesurée à partir de la face postérieure S2 du miroir 1. La valeur de la longueur L peut être déterminée d'une des façons déjà connues, en fonction des dimensions et des conditions d'utilisation du miroir 1, ainsi que des exigences de stabilité dimensionnelle qui sont requises pour celui-ci. Par exemple, la longueur L peut être déterminée en effectuant des simulations numériques de déformations thermoélastiques du miroir 1. Les raidisseurs 2 possèdent donc chacun des faces latérales 22b et 22c qui sont globalement perpendiculaires à la face postérieure S2 du miroir 1, ainsi qu'une face d'extrémité 21 a qui est opposée à la face S2 du miroir 1 et est globalement tournée vers l'écran 10.

Dans ce premier exemple, les raidisseurs 2 portent un ensemble d'isolation radiative 3, qui recouvre au moins la face d'extrémité 21 a de chacun d'eux. De préférence, l'ensemble d'isolation radiative 3 recouvre aussi une partie au moins des faces latérales 22b et 22c des nervures 22. L'ensemble d'isolation radiative 3 empêche qu'un rayonnement qui est produit thermiquement par l'écran 10 soit absorbé par les raidisseurs 2. Il empêche aussi qu'un rayonnement qui serait produit thermiquement par les raidisseurs 2 atteigne l'écran 10. De cette façon, l'interaction radiative directe entre les raidisseurs 2 et l'écran 10 est inhibée.

Simultanément, des portions P2 de la surface S2 du miroir 1 qui sont situées au fond des cellules C ne sont pas recouvertes par l'ensemble d'isolation radiative 3. Ainsi, le miroir 1 interagit encore thermiquement avec l'écran 10, par l'intermédiaire des rayonnements qui sont produits thermiquement par les portions P2 ou par l'écran 10. Ces rayonnements sont transmis directement entre le miroir 1 et l'écran 10, sans être interceptés par les raidisseurs 2 ni relayés par conduction de chaleur le long de ces derniers. Pour cette raison, les gradients de température axiaux au sein des raidisseurs 2 sont diminués. Simultanément, l'interaction radiative directe entre le miroir 1 et l'écran 10 est augmentée.

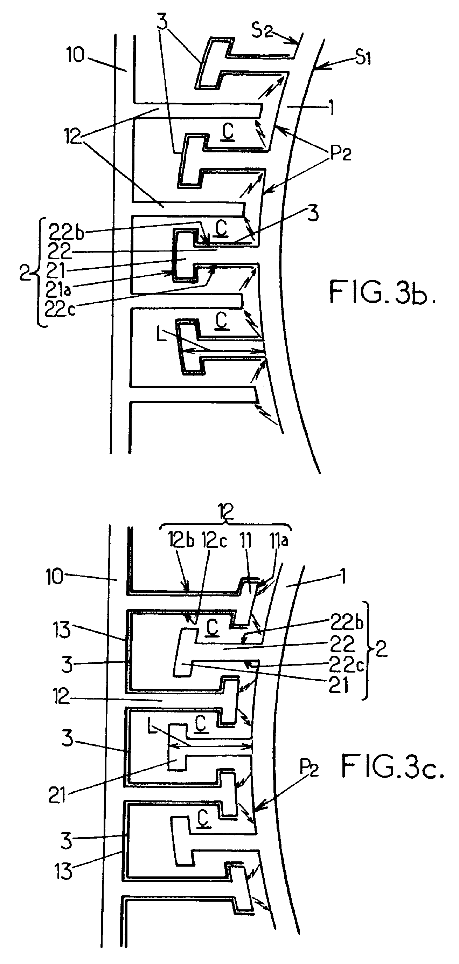

Les figures 3b et 3c illustrent respectivement un exemple non revendiqué et un mode de réalisation de l'invention, pour une configuration des raidisseurs 2 qui est dite fermée. Dans une telle configuration fermée, chaque raidisseur 2 comporte une aile transversale 21 en plus de la nervure 22. L'aile 21 d'un raidisseur 2 est globalement perpendiculaire à la nervure 22 du même raidisseur, et portée par l'extrémité de cette nervure 22 qui est opposée à la face S2. L'aile 21 est donc globalement parallèle à la face postérieure S2 du miroir 1, et la face d'extrémité 21 a de chaque raidisseur 2 est alors portée par l'aile 21 correspondante. Dans ce cas, l'écran 10 peut présenter des prolongements 12 qui pénètrent dans chaque cellule C, entre deux raidisseurs 2 qui forment cette cellule. Les prolongements 12 n'ont pas de contact matériel direct avec les raidisseurs 2.

Conformément à l'exemple de la figure 3b, l'ensemble d'isolation radiative 3 peut encore être porté par les raidisseurs 2. Il peut alors recouvrir chaque raidisseur 2 dans sa totalité. Plus particulièrement, l'ensemble 3 recouvre au moins l'aile 21 sur la face d'extrémité 21 a, ainsi que les deux faces latérales 22b et 22c de la nervure 22. Les prolongements 12 de l'écran 10 à l'intérieur de chaque cellule C favorisent alors l'interaction radiative directe entre l'écran 10 et les portions P2 de la face postérieure S2 du miroir 1.

Dans le mode de réalisation de la figure 3c, l'ensemble d'isolation radiative 3 est porté par l'écran 10. Il recouvre alors des faces latérales 12b et 12c des prolongements 12, qui sont tournées globalement vers les faces latérales 22b et 22c des raidisseurs 2 entourant la cellule C correspondante. L'ensemble d'isolation radiative 3 recouvre aussi des portions 13 de l'écran 10 qui sont situées entre deux prolongements 12 voisins. La face d'extrémité 11 a de chaque prolongement 12, qui est globalement parallèle à la surface S2 du miroir 1, n'est pas recouverte par l'ensemble d'isolation radiative 3. De cette façon, l'interaction radiative directe entre l'écran 10 et les portions P2 de la face postérieure S2 du miroir 1 est conservée. Pour accroître encore cette interaction directe, il est alors avantageux que chaque prolongement 12 de l'écran 10 comporte aussi une aile transversale 11, qui forme la face d'extrémité 11a de ce prolongement. Cette aile de prolongement 11 s'étend à l'extrémité de chaque prolongement 12, en étant globalement perpendiculaire à la direction générale de celui-ci. Elle est donc globalement parallèle à la portion P2 de la surface S2 qui appartient à la même cellule C.

L'ensemble d'isolation radiative 3 peut être réalisé de plusieurs façons.

Selon une première façon, il peut comprendre au moins une portion d'une couche mince d'un métal. Elle peut être déposée en utilisant l'un des procédés de dépôt sous vide qui sont connus de l'Homme du métier. Lorsque les raidisseurs 2 appartiennent à la même pièce de fabrication que le miroir 1, et que la portion de couche mince est déposée sur les raidisseurs, les portions P2 de la face postérieure S2 peuvent être masquées pendant le dépôt. Alternativement, la couche mince peut être retirée des portions P2 après avoir été déposée continûment sur les portions P2 et les raidisseurs 2. De façon similaire, lorsque la couche mince est déposée sur l'écran 10, les faces d'extrémités 11 a peuvent être masquées pendant le dépôt, ou bien la couche mince peut être retirée de ces faces 11 a après dépôt.

La couche mince qui constitue l'ensemble d'isolation radiative 3 peut être en or (Au), en argent (Ag) ou en aluminium (AI), par exemple, ou en un alliage qui comprend l'un de ces métaux. Le métal de la couche mince est choisi en fonction de la valeur du coefficient d'émissivité infrarouge pour celui-ci. Ce coefficient, qui est noté ε, caractérise la capacité d'un matériau à émettre et à absorber du rayonnement. L'isolation radiative que procure la couche mince entre les raidisseurs 2 et l'écran 10 est alors d'autant plus efficace que cette valeur du coefficient d'émissivité ε est faible pour le métal constitutif de cette couche. A titre d'illustration, le tableau 1 ci-dessous compare les valeurs d'émissivité infrarouge des trois métaux cités plus haut à celles de trois matériaux possibles pour fabriquer les raidisseurs 2 en une seule pièce avec le miroir 1.

**Tableau 1**

| Raidisseurs 2 | Emissivité ε | Couche mince | Emissivité ε |
|---|---|---|---|
| Carbure de silicium (SiC) | 0,67 | Or (Au) | < 0,02 |
| Bérylium (Be) | 0,61 | Argent (Ag) | < 0,03 |
| Zerodur® | 0,8 | Aluminium (AI) | < 0,05 |

Le zerodur® est un verre connu de l'Homme du métier qui est couramment utilisé pour fabriquer des miroirs. De façon connue, la valeur du coefficient d'émissivité infrarouge ε dépend de la rugosité de la couche mince. Cette valeur augmente avec la rugosité, si bien qu'il peut être avantageux d'utiliser l'une des méthodes connues pour réduire cette rugosité de la couche mince, ainsi que la rugosité de son substrat, c'est-à-dire celle des raidisseurs 2 ou des parties recouvertes de l'écran 10. Le couplage radiatif entre les raidisseurs 2 et l'écran 10 est alors réduit approximativement dans le rapport entre la valeur du coefficient d'émissivité infrarouge du matériau des raidisseurs par celle du matériau de la couche mince. La couche mince peut avoir une épaisseur inférieure à 5 µm (micromètre), voire inférieure à 1 µm. Les inventeurs ont aussi vérifié que la différence entre la valeur du coefficient de dilatation thermique du matériau d'une telle couche mince et celle pour le matériau du miroir 1 ne provoquait pas des déformations thermoélastiques significatives vis-à-vis du gain apporté par l'invention.

Selon une seconde façon de réaliser l'ensemble d'isolation radiative 3, celui-ci peut comprendre au moins une portion d'un film isolant qui est recouvert d'une couche mince de métal. La couche mince métallique peut être identique à celle décrite précédemment. Le film adhère alors partiellement ou totalement sur les raidisseurs 2 ou sur les parties désirées de l'écran 10 qui ont été énumérées plus haut en relation avec les figures 3b et 3c, par une face de ce film opposée à la couche mince. L'adhésion peut être réalisée en utilisant une des colles qui sont couramment utilisées pour des applications spatiales. L'adhérence partielle permet de limiter les déformations thermoélastiques induites par les dilatations thermiques différentielles qui apparaissent entre l'isolation radiative 3 et les raidisseurs 2.

Alternativement, l'ensemble d'isolation radiative 3 peut comprendre un masque à ouvertures qui est découpé dans une nappe de matelas multicouche isolant. Un tel matelas multicouche isolant est couramment désigné par MLI pour «MultiLayer Insulation» en anglais, et est très utilisé dans l'équipement de satellites, de sorte que sa description n'est pas nécessaire ici.

Enfin, l'ensemble d'isolation radiative 3 peut aussi comprendre un masque à ouvertures qui est découpé dans une feuille métallique, par exemple dans une feuille de clinquant de quelques dixièmes de millimètres d'épaisseur. Une telle réalisation peut être à la fois rapide à mettre en oeuvre et légère en poids.

Pour les deux dernières réalisations de l'ensemble d'isolation radiative 3, le masque est pourvu d'ouvertures qui correspondent aux portions P2 de la surface postérieure S2 du miroir 1. Lorsque le masque est destiné à être appliqué contre la face postérieure S2 du miroir 1, ces ouvertures sont conçues pour exposer les portions P2. Alternativement, lorsque le masque est destiné à être appliqué contre l'écran 10, les ouvertures sont prévues pour exposer les faces d'extrémité 11a des prolongements 12. En outre, selon le cas, le masque peut être mis en forme de façon à s'appliquer sur les contours des raidisseurs 2 ou de l'écran 10.

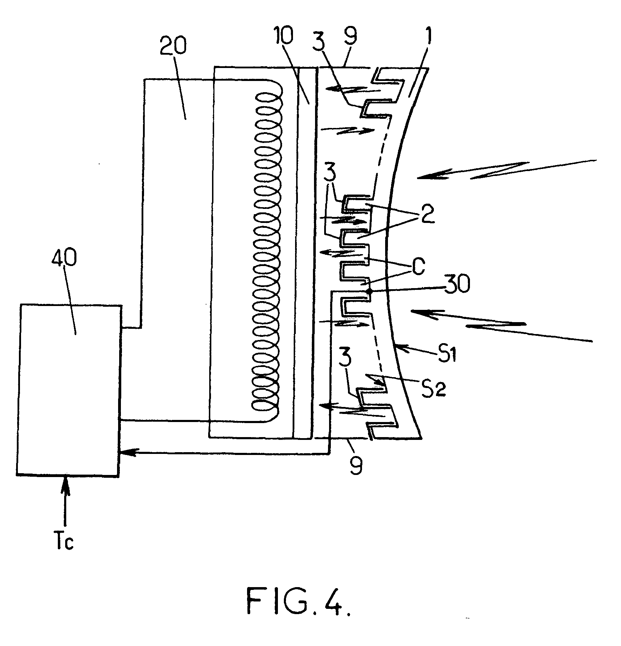

La figure 4 illustre la mise en oeuvre de l'invention avec une régulation active de la température de l'écran 10. L'unité de chauffage et/ou de refroidissement 20, le capteur de température 30 et l'unité de contrôle 40 peuvent être similaires à ceux décrits en relation avec la figure 2. Le capteur 30 est de préférence situé contre l'une des portions P2 de la face S2 du miroir 1, à l'intérieur d'une cellule C. Les inventeurs ont constaté que la température du miroir 1 peut ainsi être maintenue constante à 0,1 °C près ou moins, alors que le rayonnement externe qui est absorbé sur la face antérieure S1 varie d'environ 150 W/m² (watt par mètre-carré). Grâce à l'isolation radiative des raidisseurs 2 apportée par l'invention, cette constance de la température du miroir 1 conduit à des gradients de température axiaux qui sont très faibles à l'intérieur des raidisseurs 2. Pour l'intensité du rayonnement externe et la température du miroir 1 qui viennent d'être citées, l'écart de température entre les deux extrémités des raidisseurs 2, respectivement opposée à la face S2 et au niveau de celle-ci, est de l'ordre de 0,013°C en valeur absolue, au lieu de 0,078°C sans utiliser l'ensemble d'isolation radiative 3. Il s'en suit que les déformations thermoélastiques de l'ensemble du miroir 1 avec les raidisseurs 2 sont diminuées proportionnellement à la réduction du gradient axial. La stabilité des caractéristiques optiques du miroir 1, ainsi que la résolution des images qui sont formées en l'utilisant, sont aussi améliorées en conséquence.

Il est entendu que l'invention peut être mise en oeuvre tout en modifiant certains aspects des modes de réalisation qui ont été décrits en détail. En particulier, les dimensions de certains éléments du système peuvent être différentes des valeurs numériques qui ont été citées, en fonction de chaque application.

Enfin, pour la configuration fermée des raidisseurs, il est possible d'associer deux ensembles d'isolation radiative qui sont disposés respectivement sur les raidisseurs conformément à la figure 3b et sur la structure émissive conformément à la figure 3c.

## Revendications

1. Système permettant de stabiliser une structure rigide vis-à-vis de déformations thermoélastiques, et comprenant :
- la structure rigide (1), ayant une face antérieure (S1) susceptible de recevoir un flux thermique externe et une face postérieure (S2) opposée à ladite face antérieure ;
- un réseau de raidisseurs (2) connectés rigidement à la face postérieure de la structure rigide et en contact thermique avec ladite face postérieure, chaque raidisseur comprenant au moins une paroi (22) s'étendant perpendiculairement à ladite face postérieure, ledit réseau de raidisseurs formant un ensemble de cellules vides (C) fermées chacune sur un côté par une portion (P2) de la face postérieure de la structure rigide ;
- une structure émissive (10) disposée en vis-à-vis de la face postérieure de la structure rigide munie des raidisseurs, de sorte que ladite structure rigide (1) et la structure émissive (10) soient en interaction thermique réciproque par l'intermédiaire de rayonnements se propageant entre ladite structure émissive et ladite face postérieure de la structure rigide ; et
- au moins un ensemble d'isolation radiative (3) disposé entre certains au moins des raidisseurs (2) et la structure émissive (10) sans masquer les portions (P2) de la face postérieure (S2) de la structure rigide (1) situées dans les cellules (C) par rapport à des portions de la structure émissive, de sorte qu'une interaction thermique par rayonnement entre les raidisseurs et la structure émissive soit inhibée sans que l'interaction thermique par rayonnement entre la structure rigide et la structure émissive soit elle-même inhibée ;
le système étant **caractérisé en ce que** la structure émissive (10) possède des prolongements (12) qui pénètrent dans certaines au moins des cellules (C) avec des faces latérales de chaque prolongement tournées vers les parois (22)
des raidisseurs (2) formant la cellule correspondante, l'ensemble d'isolation radiative (3) étant porté par ladite structure émissive et recouvrant les faces latérales respectives (12b, 12c) de certains au moins des dits prolongements ainsi que des portions (13) de la structure émissive situées entre des prolongements voisins, mais ne recouvrant pas des faces d'extrémités respectives (11a) des dits prolongements tournées vers les portions (P2) de la face postérieure (S2) de la structure rigide (1) situées dans les cellules.

2. Système selon la revendication 1, dans lequel la structure rigide (1) forme un miroir, par exemple un miroir de télescope, la face antérieure (S1) étant réfléchissante pour au moins une longueur d'onde d'utilisation dudit miroir.

3. Système selon la revendication 1 ou 2, dans lequel l'ensemble d'isolation radiative (3) comprend au moins une portion d'une couche mince d'un métal déposée sur une partie de la structure émissive (10).

4. Système selon la revendication 1 ou 2, dans lequel l'ensemble d'isolation radiative (3) comprend au moins une portion d'un film isolant recouvert d'une couche mince d'un métal, ledit film isolant adhérant totalement ou partiellement sur une partie de la structure émissive (10) par une face dudit film opposée à la couche mince.

5. Système selon la revendication 1 ou 2, dans lequel l'ensemble d'isolation radiative (3) comprend un masque à ouvertures découpé dans une nappe de matelas multicouche isolant ou dans une feuille métallique.

6. Système selon l'une quelconque des revendications précédentes, comprenant en outre :
- une unité de chauffage et/ou de refroidissement (20), agencée pour chauffer ou refroidir la structure émissive (10) ;
- un capteur de température (30), disposé pour fournir un signal de mesure d'une température de la structure rigide (1) ; et
- une unité de commande (40), connectée pour asservir un fonctionnement de ladite unité de chauffage et/ou de refroidissement en fonction d'un écart entre la température de la structure rigide et une température de consigne.

7. Système selon la revendication 6, dans lequel le capteur de température (30) est disposé pour fournir un signal de mesure d'une température de la face postérieure (S2) de la structure rigide (1).

8. Système selon la revendication 6 ou 7, comprenant plusieurs ensembles de contrôle de température agencés en parallèle, de façon à contrôler plusieurs températures de la structure rigide (1) simultanément dans des zones différentes de ladite structure rigide.

9. Système selon l'une quelconque des revendications précédentes, comprenant en outre un élément de fermeture latérale (9) disposé entre des bords périphériques respectifs de la structure rigide (1) et de la structure émissive (10), ledit ensemble de fermeture latérale formant une isolation radiative entre la face postérieure (S2) de la structure rigide et un environnement externe au système.

## Claims

1. System enabling a rigid structure to be stabilised with respect to thermoelastic deformations and comprising:
- the rigid structure (1), having a front face (S1) designed to receive an external heat flow and a rear face (S2) opposing said front face;
- a network of stiffeners (2) rigidly connected to the rear face of the rigid structure and in thermal contact with said rear face, each stiffener comprising at least one wall (22) extending perpendicular to said rear face, said network of stiffeners forming an arrangement of empty cells (C), each closed on one side by a portion (P2) of the rear face of the rigid structure;
- an emissive structure (10) disposed facing the rear face of the rigid structure provided with the stiffeners so that said rigid structure (1) and the emissive structure (10) mutually thermally interact due to radiation propagating between said emissive structure and said rear face of the rigid structure; and
- at least one radiation isolating arrangement (3) disposed between at least some of the stiffeners (2) and the emissive structure (10) without masking the portions (P2) of the rear face (S2) of the rigid structure (1) located in the cells (c) from portions of the emissive structure so that a thermal interaction based on radiation between the stiffeners and the emissive structure is inhibited without the thermal interaction induced by radiation between the rigid structure and the emissive structure being itself inhibited;
the system being **characterised in that** the emissive structure (10) has extensions (12) which penetrate at least some of the cells (C) and side faces of each extension being directed towards the walls (22) of the stiffeners (2) forming the corresponding cell, the radiation isolating arrangement (3) being supported by said emissive structure and covering the respective side faces (12b, 12c) of at least some of said extensions as well as portions (13) of the emissive structure disposed between adjacent extensions but not covering respective end faces (11 a) of said extensions directed towards the portions (P2) of the rear face (S2) of the rigid structure (1) located in the cells.

2. System as claimed in claim 1, in which the rigid structure (1) forms a mirror, for example a telescope mirror, the front face (S1) being reflective for at least one operating wavelength of said mirror

3. System as claimed in claim 1 or 2, in which the radiation isolating arrangement (3) comprises at least a portion of a thin layer of a metal deposited on a part of the emissive structure (10).

4. System as claimed in claim 1 or 2, in which the radiation isolation arrangement (3) comprises at least a portion of an isolating film covered by a thin layer of a metal, said isolating film being totally or partially adhered to a part of the emissive structure (10) by a face of said film opposite the thin layer.

5. System as claimed in claim 1 or 2, in which the radiation isolating arrangement (3) comprises a mask with openings cut out from a layer of a multilayer isolating mattress or from a metal sheet.

6. System as claimed in any one of the preceding claims, further comprising:
- a heating and/or cooling unit (20), configured so as to heat or cool down the emissive structure (10);
- a temperature sensor (30) disposed so as to provide a measurement signal of a temperature of the rigid structure (1); and
- a control unit (40), connected so as to control operation of said heating and/or cooling unit as a function of a difference between the temperature of the rigid structure and a set-point temperature.

7. System as claimed in claim 6, in which the temperature sensor (30) is disposed so as to provide a measurement signal of a temperature of the rear face (S2) of the rigid structure (1).

8. System as claimed in claim 6 or 7, comprising several temperature control units disposed in parallel so as to control several temperatures of the rigid structure (1) simultaneously in different zones of said rigid structure.

9. System as claimed in any one of the preceding claims, further comprising a side closure element (9) disposed between respective peripheral edges of the rigid structure (1) and the emissive structure (10), said side closure unit forming a radiation isolation between the rear face (S2) of the rigid structure and an environment external to the system.

## Patentansprüche

1. System zum Stabilisieren einer starren Struktur gegen thermoelastische Verformungen, wobei das System aufweist:
- die starre Struktur (1) mit einer vorderen Fläche (S1), die einen externen thermischen Fluss empfangen kann, und mit einer hinteren Fläche (S2), die der vorderen Fläche gegenüberliegt,
- ein Netz von Versteifungen (2), die starr mit der hinteren Fläche der starren Struktur verbunden sind und in thermischem Kontakt mit der hinteren Fläche sind, wobei jede Versteifung mindestens eine Wand (22) aufweist, die sich senkrecht zu der hinteren Fläche erstreckt, wobei das Netz von Versteifungen eine Anordnung von leeren Zellen (C) bildet, von denen jede an einer Seite durch einen Abschnitt (P2) der hinteren Fläche der starren Struktur geschlossen ist;
- eine emittierende Struktur (10), die gegenüber der mit Versteifungen ausgestatteten hinteren Fläche der starren Struktur angeordnet ist, so dass durch die Strahlung, die sich zwischen der emittierenden Struktur und der hinteren Fläche der starren Struktur ausbreitet, die starre Struktur (1) und die emittierende Struktur (10) in gegenseitiger thermischer Wechselwirkung stehen; und
- mindestens eine strahlenisolierende Anordnung (3), die zwischen mindestens einigen Versteifungen (2) und der emittierenden Struktur (10) angeordnet ist, ohne die in den Zellen (C) gelegenen Abschnitte (P2) der hinteren Fläche (S2) der starren Struktur (1) von Abschnitten der emittierenden Struktur abzuschirmen, so dass eine auf Strahlung basierende thermische Wechselwirkung zwischen den Versteifungen und der emittierenden Struktur gehemmt ist, ohne dass die auf Strahlung basierende thermische Wechselwirkung zwischen der starren Struktur und der emittierenden Struktur ihrerseits gehemmt wäre;
wobei das System **dadurch gekennzeichnet ist, dass** die emittierende Struktur (10) Vorsprünge (12) aufweist, die in mindestens einige Zellen (C) ragen, wobei Seitenflächen jedes Vorsprungs den Wänden (22) der Versteifungen (2), die die entsprechende Zelle bilden, zugewandt sind, wobei die strahlenisolierende Anordnung (3) von der emittierenden Struktur getragen wird und die jeweiligen Seitenflächen (12b,12c) mindestens einiger der Vorsprünge sowie Abschnitte (13) der emittierenden Struktur, die zwischen benachbarten Vorsprüngen angeordnet sind, bedeckt, jedoch jeweilige Endflächen (11a) der Vorsprünge, die den in den Zellen gelegenen Abschnitten (P2) der hinteren Fläche (S2) der starren Struktur (1) zugewandt sind, nicht bedeckt.

2. System nach Anspruch 1, in welchem die starre Struktur (1) einen Spiegel bildet, zum Beispiel einen Teleskopspiegel, wobei die vordere Fläche (S1) für mindestens eine Nutzwellenlänge des Spiegels reflektierend ist.

3. System nach Anspruch 1 oder 2, in welchem die strahlenisolierende Anordnung (3) mindestens einen Abschnitt aus einer dünnen Metallschicht aufweist, die an einem Teil der emittierenden Struktur (10) aufgebracht ist.

4. System nach Anspruch 1 oder 2, in welchem die strahlenisolierende Anordnung (3) mindestens einen Abschnitt aus einer isolierenden Schicht aufweist, die mit einer dünnen Metallschicht bedeckt ist, wobei die isolierende Schicht mit ihrer der dünnen Schicht gegenüberliegenden Fläche vollständig oder teilweise an einem Teil der emittierenden Struktur (10) haftet.

5. System nach Anspruch 1 oder 2, in welchem die strahlenisolierende Anordnung (3) eine aus einem isolierenden Mehrschichtstapel oder aus einer Metallfolie zugeschnittene Lochmaske aufweist.

6. System nach einem der vorstehenden Ansprüche, das außerdem aufweist:
- eine Heiz- und/oder Kühleinheit (20) zum Heizen oder Kühlen der emittierenden Struktur (10);
- einen Temperatursensor (30), der angeordnet ist, um ein Signal einer Messung einer Temperatur der starren Struktur (1) zu liefern; und
- eine angeschlossene Steuereinheit (40) zur Regelung eines Betriebs der Heiz- und/oder Kühleinheit in Abhängigkeit eines Unterschieds zwischen der Temperatur der starren Struktur und einer Solltemperatur.

7. System nach Anspruch 6, in welchem der Temperatursensor (30) so angeordnet ist, um ein Signal einer Messung einer Temperatur der hinteren Fläche (S2) der starren Struktur (1) zu liefern.

8. System nach Anspruch 6 oder 7, mit mehreren parallel angeordneten Temperatursteueranordnungen, um so gleichzeitig in unterschiedlichen Zonen der starren Struktur mehrere Temperaturen der starren Struktur (1) zu steuern.

9. System nach einem der vorstehenden Ansprüche, außerdem mit einem seitlichen Verschlusselement (9), das zwischen einem Umfangsrand der starren Struktur (1) und einem Umfangsrand der emittierenden Struktur (10) angeordnet ist, wobei das seitliche Verschlusselement eine Strahlungsisolation zwischen der hinteren Fläche (S2) der starren Struktur und einer externen Umgebung des Systems bildet.
